# EUROPÄISCHE PATENTANMELDUNG

(11) **EP 2 575 103 A1**
(43) Veröffentlichungstag der Anmeldung: **03.04.2013**
(21) Anmeldenummer: 12401192.5
(22) Anmeldetag: 24.09.2012
(51) Int. Cl.: G06Q 50/02

(54) **Elektronisches Rechensystem**

(30) Priorität: 28.09.2011 DE 102011054017
(71) Anmelder: Amazonen-Werke H. Dreyer GmbH & Co. KG, 49205 Hasbergen (DE)
(72) Erfinder: Fröschle, Heike, 73760 Ostfildern (DE); Kiefer, Stefan, 49074 Osnabrück (DE); Rahe, Florian, 49504 Lotte (DE)

(57) **Zusammenfassung**

Elektronisches Rechensystem zur Ermittlung des Feuchtebedeckungsgrades von Pflanzen auf zu bearbeitenden landwirtschaftlichen Flächen mittels eines in dem Speicher eines Computers hinterlegten Programmes mit einem Prognosetool unter Berücksichtigung vergangener und/oder aktueller und/oder vorhergesagter und/oder zu erwartenden Wetterdaten, wobei mittels des Programmes aus diesen und/oder einer Auswahl aus diesen Wetterdaten eine Voraussage über den zu erwartenden Taubedeckungsgrad pro Zeitpunkt auf den zu bearbeitenden landwirtschaftlichen Flächen errechnet und das errechnete Ergebnis auf einem Ausgabemedium ausgeben wird.

## Beschreibung

Die Erfindung betrifft ein elektronisches Rechensystem zur Ermittlung des Feuchtebedeckungsgrades von Pflanzen auf zu bearbeitenden landwirtschaftlichen Flächen.

Beim Spritzen (Ausbringen von flüssigen Pflanzenschutzmitteln mit einer Feldspritze) auf landwirtschaftlichen Flächen gibt es je nach Wirkstoff genaue Vorgaben für das Mischungsverhältnis zwischen Wirkstoff und Wasser. Weiterhin ist auch die ausgebrachte Menge an Spritzmittel pro Fläche von besonderer Bedeutung. Bei diesen Vorgaben muss auch die auf den Blättern vorhandene Menge an Wasser berücksichtigt werden. Ist die Gesamtmenge an Wasser zu groß besteht die Gefahr, dass zu viel Flüssigkeit auf die Blätter der Pflanzen kommt und dann die Flüssigkeit (so auch Wirkstoff) von der Pflanze herunterfließt. Auch wenn der aufgebrachte Wirkstoff ggf. nicht herunterfließt, wird die Spritzbrühe durch das vorhandene Wasser verdünnt, so dass ggf. die Wirksamkeit der Maßnahme deutlich reduziert wird. Die Grenzwerte unter denen das entsprechend passieren wird, hängen zusätzlich noch von der Kulturart, der Applikation (Wirkstoff, Düse usw.) und dem Wachstumsstadium der Pflanzen ab.

Da bei zu niedriger Luftfeuchtigkeit, starker Hitze oder Sonnenschein Spritzmaßnahmen kaum durchzuführen sind, muss damit auf die Abendstunden, Nacht oder die Morgenstunden ausgewichen werden. Genau zu diesen Zeitpunkten ist mit Tau zu rechnen. Somit ist für den Landwirt kaum zu entscheiden, zu welchem Zeitpunkt er eine Pflanzenschutzmaßnahme am sinnvollsten durchführen kann und soll.

In der 1 961 299 B1 wird ein Tausensor beschrieben, der am Schlepper oder an der Spritze montiert die Taumenge misst. Es ist auch schwierig, die Feuchtigkeit in den Pflanzen von der Menge an Wasser oder Tau auf den Pflanzen zu unterscheiden. Ein weiteres Problem bei der Taubildung ist, dass dies ein langsamer aber dynamischer Prozess ist. Somit kann zu Beginn einer Spritzmaßnahme gar kein oder wenig Tau auf den Pflanzen sein. Zum Ende der Maßnahme kann sich die Taumenge aber deutlich vergrößert haben. Wichtig ist an dieser Stelle dass die Summe an Spritzbrühe und Tau bestimmte Grenzen nicht überschreiten darf. Somit müsste beim Spritzen berücksichtigt werden wie viel Tau sich in den auf die Maßnahme folgenden Stunden bilden wird.

Der Erfindung liegt die Aufgabe zugrunde, dem Anwender ein Entscheidungs-Unterstützungs-System zum Spritzen zur Verfügung zu stellen, um günstige und/oder optimale Zeitfenster für das Ausbringen der Spritzflüssigkeit zu ermitteln.

Diese Aufgabe wird durch die Merkmale des Anspruches 1 gelöst.

Infolge dieser Maßnahmen können mithilfe des Programmes und der Wetterdaten hochwertige Voraussagen getroffen werden, zu welchen Zeitpunkten optimale Ausbringbedingungen zum Ausbringen der Pflanzenschutzflüssigkeiten bestehen.

Um zu hochwertigen Voraussagen über den Taubedeckungsgrad zu kommen, ist vorgesehen, dass das System auf in zumindest einer Datenbank abgespeicherter lokaler, regionaler, überregionaler und/oder globaler Wetterdaten zugreift und bei der Berechnung des jeweiligen Taubedeckungsgrades berücksichtigt.

Um sehr genaue Aussagen für die zu behandelnde Fläche treffen zu können, ist in einer Ausführungsform vorgesehen, dass auf dem zu bearbeitenden landwirtschaftlichen Flächen lokale Wetterstationen, die die lokalen Wetterdaten liefern, vorhanden sind.

Um eine weitere Verbesserung der Voraussagequalität für den optimalen Zeitpunkt für die Ausbringung der Pflanzenschutzflüssigkeit zu erreichen, ist vorgesehen, dass das System bei der Berechnung des jeweiligen Taubedeckungsgrades zusätzlich die Blatttemperatur der Pflanzen und/oder die Oberflächentemperatur des Pflanzenbestandes auf der zu bearbeitenden landwirtschaftlichen Fläche berücksichtigt.

Um dem Anwender und/oder Landwirt die errechneten Daten in einfacher Weise mitteilen zu können, ist vorgesehen, dass die tatsächliche und/oder zu erwartende Taumenge zu den vorgesehenen Behandlungszeitpunkten auf dem Ausgabemedium ausgegeben und/oder in einem geeigneten Speichermedium abgespeichert wird.

Um die optimale Spritzmittelkonzentration für die jeweils vorherrschende Taumenge, die auf die Blätter der Pflanze bei der Durchführung der Pflanzenschutzmaßnahme sein wird, berechnen zu können, ist vorgesehen, dass mittels des Programmes aufgrund hinterlegter Daten über das auszubringende Spritzmittel in Verbindung mit dem berechneten Taubedeckungsgrad die Konzentration der auszubringenden Spritzbrühe berechnet wird und auf dem Ausgabemedium ausgebbar ist.

Weiterhin ist vorgesehen, dass aufgrund des durch das System berechneten Taubedeckungsgrades auf dem Ausgabemedium ausgebbar ist, ob die geplante Pflanzenschutzmaßnahme durchführbar ist.

Um vor Ort dem Anwender die Daten über die Vorhersage des Taubedeckungsgrades in einfacher Weise mitteilen zu können, ist vorgesehen, dass das Ausgabemedium auf dem Pflanzenschutzgerät angeordnet ist.

Weiterhin ist vorgesehen, dass mittels des auf dem Pflanzenschutzgerät angeordneten Ausgabemediums die während des Ausbringvorganges von dem Rechnersystem errechneten und/oder ausgegebenen Daten unter Berücksichtigung der in dem Rechnersystemen enthaltenen Toleranzgrenzen angezeigt wird, ob die Konzentration der Spritzbrühe von der optimalen Konzentration abweicht und/oder die Taumenge für die Pflanzenschutzmaßnahme zu groß ist, und dass beim Überschreiten der Toleranzgrenzen ein Hinweis auf dem Ausgabemedium ausgegeben wird. Hierdurch wird dem Anwender mitgeteilt, wann die optimalen Verhältnisse für das Ausbringen der Pflanzenschutzflüssigkeit nicht mehr gegeben sind.

Zusammengefasst besteht das Entscheidungs-Unterstützungssystem zum Spritzen aus einem Rechner, Smartphone oder Bedienterminal mit Microcontroller, dem aktuelle und oder historische lokale Wetterdaten (z.B. Temperatur, Luftdruck, Luftfeuchtigkeit, Hoch-/Tiefdruckwetterlagen, Wetterumschwünge, Niederschlag) zur Verfügung stehen, bzw. diese gespeichert hat. Diese Daten können aus dem Internet und/oder einer Datenbank und/oder von einer lokalen und/oder überregionalen Wetterstation stammen. Dabei können die Daten der Wetterstation im Internet oder in der Datenbank gespeichert werden. Der Landwirt kann für verschiedene Flächen die Kulturart und das Wachstumsstadium der Pflanzen eingeben. Anhand der gespeicherten, eingegebenen und aktuell ermittelten Daten berechnet der Rechner die Wahrscheinlichkeit, ob eine Taubildung in der nächsten Zeit stattfinden wird. Zudem schätzt der Rechner ggf. den Zeitraum der Taubildung und eine mögliche Taumenge ab. Diese Abschätzung kann auf verschiedene Weise geschehen. Es kann zum einen ein vorher ermitteltes Modell zur Tauabschätzung verwendet werden. Eine weitere Möglichkeit ist die in den vorherigen Tagen aufgezeichnete Daten zu verwenden. Hierbei werden die aktuellen Daten mit älteren Daten verglichen. Anhand der Wetterdaten oder Taumengen der vorherigen Tage kann die zu erwartende Taumenge und der Zeitraum der Taubildung für die nächste Zeit gut abgeschätzt und vorhergesagt werden. Damit kann der Landwirt entscheiden ob und wenn in welchem Zeitraum er eine Pflanzenschutzmaßnahme am sinnvollsten durchführen kann. Bei genaueren Daten kann der Rechner auch eine Empfehlung für die Maßnahme geben. Sind zusätzlich Informationen vom Spritzmittelhersteller vorhanden, kann bei Taubildung auch ein Vorschlag für ein anderes Mischungsverhältnis der Spritzbrühe gemacht werden, wobei die Menge an Wasser auf den Pflanzen (Tau) berücksichtigt wird. Damit ist der Landwirt in der Lage seine Maßnahme auch bei Taubedingungen durchzuführen, ohne eine Reduktion der Wirksamkeit der Maßnahme zu befürchten.
In einer verbesserten Ausführung ist eine überregionale und/oder lokale Wetterstation mit dem Rechner verbunden. Anhand der aufgezeichneten und/oder aktuellen Wetterdaten kann die Anzeige der Ergebnisse verbessert werden.
Noch genauere Aussagen kann der Rechner machen, wenn er mit einem Wetter-Sensor auf dem Feld drahtgebunden oder per Funk verbunden ist. Dabei können diese Daten auch fortlaufend im Internet oder einer Datenbank gespeichert werden. Dieser Sensor misst zum Beispiel Temperatur, Luftfeuchtigkeit, Blatttemperatur und/oder Oberflächentemperatur der Kulturart im Feld. Dabei ist die Blatttemperatur oder Oberflächentemperatur der Kulturart von besonderer Bedeutung. Diese Daten können zum einen zum Zeitpunkt der Planung der Maßnahme und/oder kurz vor der Durchführung und/oder während der Maßnahme ausgelesen werden. Es können auch zusätzlich gespeicherte Daten aus der Vergangenheit verwendet werden. Mit diesen überregionalen und/oder lokalen Daten kann dann die Vorhersage für den Landwirt verbessert werden.
Es können auch aktuelle Daten während des Spritzens an den Schlepper übermittelt werden, so dass der Landwirt über die aktuelle Tauentwicklung informiert ist. Weicht das Mischungsverhältnis der Spritzbrühe in seiner Spritze zu stark von der neu vorhergesagten Taumenge und dadurch optimalen Konzentration ab, so kann ihm eine Warnung angezeigt werden. Bei zu viel zu erwartendem Tau könnte dem Landwirt auch eine Warnung angezeigt werden, dass die Maßnahme nicht mehr sicher durchzuführen ist.

Zusammengefasst arbeitet das erfindungsgemäße nach folgenden Überlegungen:
Das Vorhersagesystem hat die Aufgabe eine einfache und sachgerechte Anwendung des Systems zur Ermittlung des Taubedeckungsgrades zu gewährleisten und das System eines Sensorsystems zu direkten Messung des Taubedeckungsgrades durch ein einen während der Ausbringung des Pflanzenschutzmittels durch zusätzlich zur Verfügung gestellte Information zu ergänzen.

Die Bestimmung des Vorhersagesystems ist es, anhand regional zur Verfügung stehender Wetterdaten (Online Wettervorsage) und aus den Wetterdaten der vorhergegangenen Tage, eine Aussage zu treffen, ob das Systems mit der Berücksichtigung des Taubedeckungsgrades zum Einsatz kommen kann, da eine dementsprechende Wetterlage vorliegen wird. Das System berechnet hierzu aus den Wetterdaten, anhand der MAGNUS Formel (bzw. deren Umformung) die Taupunkttemperatur, berücksichtigt den Luftdruck, Hoch- oder Tiefdruckwetterlagen sowie Wetterumschwünge und setzt dies zu einer Empfehlung für oder gegen eine Nutzung des Systems zur Berücksichtigung des Taubedeckungsgrades um. Zusätzlich werden in dieser Empfehlung die Grenzen der möglichen Ausbringung bei einer Bestimmten Taumenge für die jeweils behandelte Kultur berücksichtigt. Werden diese Grenzwerte über- oder unterschritten (d.h. es gibt zu viel oder zu wenig Tau), wird die Empfehlung, in Abhängigkeit von der behandelten Kultur und deren Entwicklungsstadium und des zum Einsatz kommenden Wirkstoffes, korrigiert. Zudem gibt das System den Beginn und das Ende des Taubildungszeitraumes in der betreffenden Nacht bekannt. Ermittelt wird dies durch die vom System "Sensorstation" anhand von Klimasensoren erfassten Werte bzgl. Temperatur, Feuchte und Blattoberflächentemperatur sowie durch die Berechnung und den Abgleich der Taupunkttemperatur und Lufttemperaturkurve des heutigen und der vergangenen Tage.

Die Sensorstation ist ein, dem Systems zur Berücksichtigung des Taubedeckungsgrades vorgeschaltetes, mit dem Entscheidungssystem verknüpftes System, bestehend aus einer lokalen/oder überregionalen Messstation/en mit verschiedenen (Klima-)Sensoren (Temperatur, Feuchte, Infrarotsensor für Messung der Oberflächentemperatur der Blätter) und einer direkt verknüpften, zentralen Datenbank. Diese Datenbank ist der Verbindungspunkt zum System Tausensor, in und aus der beider Systeme Daten entnehmen bzw. einspeisen und zu Dokumentationszwecken auch speichern können, um dem Landwirt bestimmte Informationen verfügbar zu machen

(Behandlungshistorie, Wasserverbrauch der Nacht, Tauverläufe, alle möglichen Wetterdaten der Nacht O.ä.).

Die Sensorstation liefert, sowohl für das DSS als auch für das System Tausensor, grundlegende lokale Basisdaten.

Basierend auf diesen Daten kann das System zur Berücksichtigung des Taubedeckungsgrades, anhand der Verlaufshistorie, ohne "Anlaufzeit" sofort eingesetzt werden, da die Werte der Sensorstation zunächst als Ausgangswerte dienen und dann durch die vom System Tausensor auf der Maschine während der Fahrt aufgenommenen Daten korrigiert werden. Ohne die Daten der Sensorstation ist der Einsatz des Systems Tausensor nicht möglich, da die Verlaufshistorie aufgrund der Komplexität des Taubildungsprozesses einer der wichtigsten Faktoren ist, da Tau kein konstanter physikalischer Wert ist.

Ebenfalls aufgrund der Verlaufshistorie von Taubildung, - beginn und -ende, stellt die Sensorstation die Berechnungsbasis für die Prognose des Systems zur Berücksichtigung des Taubedeckungsgrades zur Verfügung.

In beiden Fällen werden die Daten der Sensorstation an die zentrale Datenbank weitergeleitet und dort gespeichert. Die Systeme DSS und Tausensor greifen dann auf diese zu und führen die jeweils gewünschten Berechnungen (Taumenge, Angleichung der Oberflächentemperatur beim Tausensor zur Wasserregelung, Prognose und Tauzeitraum beim DSS) im jeweiligen System separat aus. Beide Systeme können die zentrale Datenbank ebenfalls zur Speicherung/Sicherung von Daten oder zu Dokumentationszwecken nutzen. Dadurch können dem Landwirt ebenfalls weitere Informationen über die Applikation, die verbrauchte Wassermenge usw. zur Verfügung gestellt werden. Vorstellbar wäre auch zu selbigem Zweck, weitere Daten von "außerhalb" der drei Systeme mit in die Datenbank aufzunehmen.

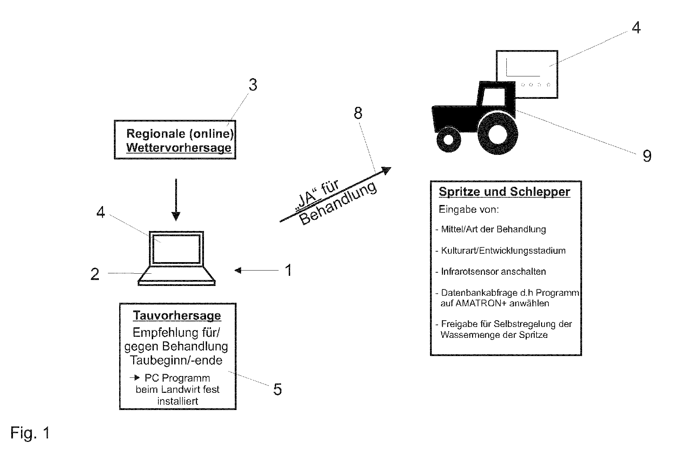

Weitere Einzelheiten der Erfindung sind der Beispielsbeschreibung zu entnehmen. Die Zeichnungen zeigen
- Fig.1: in Prinzipdarstellung das Vorhersagesystem und

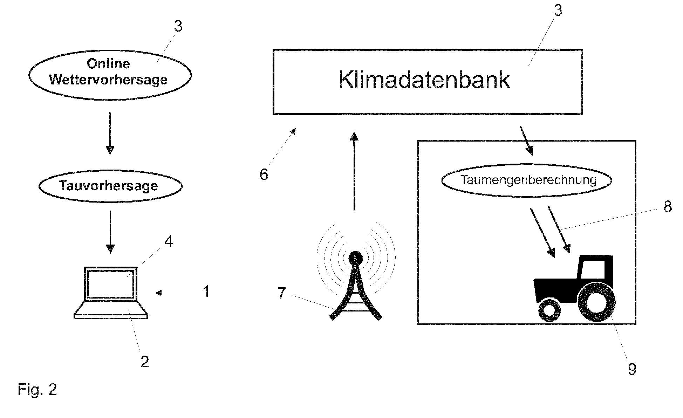

- Fig. 2.: das Schema der Vorhersage Ermittlung und Weiterleitung der Entscheidung an den Anwender.

Das elektronische Rechensystem 1 dient zur Ermittlung des Feuchtebedeckungsgrades von Pflanzen auf zu bearbeitenden landwirtschaftlichen Flächen mittels eines in dem Speicher eines Computers 2 hinterlegten Programmes mit einem Prognosetool unter Berücksichtigung vergangener und/oder aktueller und/oder vorhergesagter und/oder zu erwartenden Wetterdaten 3. Mittels des Programmes wird aus diesen und/oder einer Auswahl aus diesen Wetterdaten 3 eine Voraussage über den zu erwartenden Taubedeckungsgrad pro Zeitpunkt auf den zu bearbeitenden landwirtschaftlichen Flächen errechnet und das errechnete Ergebnis auf einem Ausgabemedium 4 ausgeben wird, wie bei 5 gezeigt ist.

Das System 1 greift auf in zumindest einer Datenbank 6 abgespeicherter lokaler, regionaler, überregionaler und/oder globaler Wetterdaten 3 zu und berücksichtigt diese bei der Berechnung des jeweiligen Taubedeckungsgrades. Auf dem zu bearbeitenden landwirtschaftlichen Flächen können lokale Wetterstationen 7, die die lokalen Wetterdaten liefern, vorhanden sein.

Das System berücksichtigt bei der Berechnung des jeweiligen Taubedeckungsgrades zusätzlich die Blatttemperatur der Pflanzen und/oder die Oberflächentemperatur des Pflanzenbestandes auf der zu bearbeitenden landwirtschaftlichen Fläche. Die tatsächliche und/oder zu erwartende Taumenge zu den vorgesehenen Behandlungszeitpunkten auf dem Ausgabemedium 4, beispielsweise einem Bildschirm oder Display ausgegeben und/oder in einem geeigneten Speichermedium abgespeichert wird.

Mittels des Programmes wird aufgrund hinterlegter Daten über das auszubringende Spritzmittel in Verbindung mit dem berechneten Taubedeckungsgrad die Konzentration der auszubringenden Spritzbrühe berechnet und auf dem Ausgabemedium 4 ausgegeben.

Aufgrund des durch das System berechneten Taubedeckungsgrades ist dieser auf dem Ausgabemedium 4 auszugeben, ob er die geplante Pflanzenschutzmaßnahme durchführbar, wie durch den Entscheidungspfeil 8 angedeutet ist.

Das Ausgabemedium 4 ist auf dem Pflanzenschutzgerät oder dem das Pflanzenschutzgerät ziehenden oder tragenden Ackerschlepper 9 angeordnet.

Mittels des auf dem Pflanzenschutzgerät oder dem das Pflanzenschutzgerät ziehenden oder tragenden Ackerschlepper 9 angeordneten Ausgabemediums 4 wird die während des Ausbringvorganges von dem Rechnersystem errechneten und/oder ausgegebenen Daten unter Berücksichtigung der in dem Rechnersystemen enthaltenen Toleranzgrenzen angezeigt, ob die Konzentration der Spritzbrühe von der optimalen Konzentration abweicht und/oder die Taumenge für die Pflanzenschutzmaßnahme zu groß ist. Bei Überschreiten der Toleranzgrenzen wird ein Hinweis auf dem Ausgabemedium 4 ausgegeben.

## Patentansprüche

1. Elektronisches Rechensystem zur Ermittlung des Feuchtebedeckungsgrades von Pflanzen auf zu bearbeitenden landwirtschaftlichen Flächen mittels eines in dem Speicher eines Computers (2) hinterlegten Programmes mit einem Prognosetool unter Berücksichtigung vergangener und/oder aktueller und/oder vorhergesagter und/oder zu erwartenden Wetterdaten, wobei mittels des Programmes aus diesen und/oder einer Auswahl aus diesen Wetterdaten (3) eine Voraussage über den zu erwartenden Taubedeckungsgrad pro Zeitpunkt auf den zu bearbeitenden landwirtschaftlichen Flächen errechnet und das errechnete Ergebnis auf einem Ausgabemedium (4) ausgeben wird.

2. Elektronisches Rechensystem nach Anspruch 1, **dadurch gekennzeichnet, dass** das System auf in zumindest einer Datenbank abgespeicherter lokaler, regionaler, überregionaler und/oder globaler Wetterdaten (3) zugreift und bei der Berechnung des jeweiligen Taubedeckungsgrades berücksichtigt.

3. Elektronisches Rechensystem nach zumindest einem der vorstehenden Ansprüche, **dadurch gekennzeichnet, dass** auf dem zu bearbeitenden landwirtschaftlichen Flächen lokale Wetterstationen (7), die die lokalen Wetterdaten liefern, vorhanden sind.

4. Elektronisches Rechensystem nach zumindest einem der vorstehenden Ansprüche, **dadurch gekennzeichnet, dass** das System (1) bei der Berechnung des jeweiligen Taubedeckungsgrades zusätzlich die Blatttemperatur der Pflanzen und/oder die Oberflächentemperatur des Pflanzenbestandes auf der zu bearbeitenden landwirtschaftlichen Fläche berücksichtigt.

5. Elektronisches Rechensystem nach zumindest einem der vorstehenden Ansprüche, **dadurch gekennzeichnet, dass** die tatsächliche und/oder zu erwartende Taumenge zu den vorgesehenen Behandlungszeitpunkten auf dem Ausgabemedium (4) ausgegeben und/oder in einem geeigneten Speichermedium abgespeichert wird.

6. Elektronisches Rechensystem nach zumindest einem der vorstehenden Ansprüche, **dadurch gekennzeichnet, dass** mittels des Programmes aufgrund hinterlegter Daten über das auszubringende Spritzmittel in Verbindung mit dem berechneten Taubedeckungsgrad die Konzentration der auszubringenden Spritzbrühe berechnet wird und auf dem Ausgabemedium (4) ausgebbar ist.

7. Elektronisches Rechensystem nach zumindest einem der vorstehenden Ansprüche, **dadurch gekennzeichnet, dass** aufgrund des durch das System (1) berechneten Taubedeckungsgrades auf dem Ausgabemedium (4) ausgebbar ist, ob er die geplante Pflanzenschutzmaßnahme durchführbar ist.

8. Elektronisches Rechensystem nach zumindest einem der vorstehenden Ansprüche, **dadurch gekennzeichnet, dass** das Ausgabemedium (4) auf dem Pflanzenschutzgerät oder dem das Pflanzenschutzgerät ziehenden oder tragenden Ackerschlepper (9) angeordnet ist.

9. Elektronisches Rechensystem nach zumindest einem der vorstehenden Ansprüche, **dadurch gekennzeichnet, dass** mittels des auf dem Pflanzenschutzgerät oder dem das Pflanzenschutzgerät ziehenden oder tragenden Ackerschlepper (9) angeordneten Ausgabemediums (4) die während des Ausbringvorganges von dem Rechnersystem (1, 2) errechneten und/oder ausgegebenen Daten unter Berücksichtigung der in dem Rechnersystemen enthaltenen Toleranzgrenzen angezeigt wird, ob die Konzentration der Spritzbrühe von der optimalen Konzentration abweicht und/oder die Taumenge für die Pflanzenschutzmaßnahme zu groß ist, und dass bei Überschreiten der Toleranzgrenzen ein Hinweis auf dem Ausgabemedium (4) ausgegeben wird.
